# EUROPEAN PATENT APPLICATION

(11) **EP 2 645 760 A1**
(43) Date of publication of application: **02.10.2013**
(21) Application number: 12360025.6
(22) Date of filing: 28.03.2012
(51) Int. Cl.: H04W 12/12, H04W 4/26

(54) **Collecting of Data Usage using a trusted application**

(71) Applicant: Alcatel Lucent, 75007 Paris (FR)
(72) Inventor: Casati, Alessio, West Molesey, Surrey KT8 1NT (GB)
(74) Representative: Sarup, David Alexander

(57) **Abstract**

A user equipment method, user equipment, a home network node method, a network node and computer program products are disclosed. The user equipment method comprises the steps of: providing a trusted application executable on the user equipment; initiating execution of the trusted application to collect data usage information; and transmitting the data usage information to a home network node. In this way, the user equipment itself may collect information related to its data usage. Because the application collecting the data usage information is trusted, the confidence in the reliability, accuracy or integrity of this collected usage information may be high. Transmitting the data usage information to the home network enables the home network to cross-correlate any data usage information it may have received from other sources with the data usage information received from the user equipment and helps to provide confidence that the data usage information is correct or helps highlight any discrepancies that may arise.

## Description

### FIELD OF THE INVENTION

The present invention relates to a user equipment method, user equipment, a home network node method, a network node and computer program products.

### BACKGROUND

Wireless telecommunications networks are known. In a cellular system, radio coverage is provided by regions of geographical area. Those regions are known as cells. A base station piece of equipment is located in each cell or a group of cells to provide the radio coverage.

It is common to find different wireless telecommunications networks provided by different network operators either in different or the same geographical area. In order to provide coverage to user equipment, agreements may exist between different network operators to allow user equipment to communicate with cells provided by different network operators. In this context, the user equipment may be intended to be supported primarily with a network operator on their network known as a "home network ". When roaming, the user equipment may instead be supported by a "visited network" provided by another network operator.

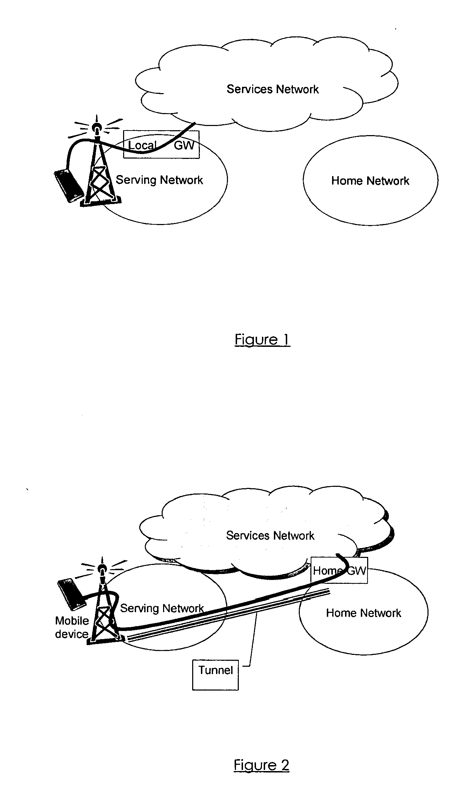

When the user equipment (such as a mobile device) capable of data communications is served by a visited network (a network which is different to the home network) it may get an Internet protocol (IP) address in the visited network from a gateway provided by this "serving" network. In this case, the user equipment is said to be using network access in a local breakout (LBO) mode (typically this is Internet access, but any other IP network may also be accessible), as illustrated in Figure 1. This differs to a mode of access known as "home routed", where the user equipment obtains an IP address from the home network using a "tunnelling" technique which makes it possible for the user equipment to get an IP address which is logically consistent with a gateway in the home network, as illustrated in Figure 2.

Although such arrangements for roaming provide advantages to the network operators and to the user, in that there can be lower latency and less usage of network resources, unexpected consequences can occur.

### SUMMARY

According to a first aspect, there is provided a user equipment method, comprising the steps of: providing a trusted application executable on the user equipment; initiating execution of the trusted application to collect data usage information; and transmitting the data usage information to a home network node.

The first aspect recognizes that a problem with user equipment that can roam is that it can be difficult to verify the user equipment data usage since this usage may need to be reported by different entities, possibly from different network operators. Even within a network operator's own network, errors in data usage can occur either accidentally or deliberately through spoofing or other mechanisms.

Accordingly, a method for the user equipment may be provided. The method may comprise the step of providing a trusted application which may be executable or may run on the user equipment. The method may comprise the step of initiating the execution of the trusted application to collect information related to data usage. The method may also comprise the step of transmitting that data usage information to a home network node.

In this way, the user equipment itself may collect information related to its data usage. Such data usage may be the amount of traffic or data transmitted and/or received by the user equipment. Because the application collecting the data usage information is trusted, the confidence in the reliability, accuracy or integrity of this collected usage information may be high. Transmitting the data usage information to the home network enables the home network to cross-correlate any data usage information it may have received from other sources with the data usage information received from the user equipment and helps to provide confidence that the data usage information is correct or helps highlight any discrepancies that may arise.

In one embodiment, the trusted application comprises an operating system. In one embodiment, the trusted application comprises a shim layer application. Accordingly, the application may be provided as part of an operating system executing on the user equipment or may be part of a shim layer provided between an operating system and the user applications. It will be appreciated that a variety of techniques may be used to ensure the integrity of and trust in the trusted application.

In one embodiment, the step of initiating comprises initiating execution of the trusted application when it is determined that the user equipment is supporting communication with network nodes. Accordingly, the trusted application may be initiated whenever any communication occurs. In this way, usage information may be collected whenever the user equipment is supporting communication, be that with the home network, a visited network or with any other network device. Hence, additional usage information may be collected over and above that normally available to the network.

In one embodiment, the step of initiating comprises initiating execution of the trusted application when it is determined that the user equipment is supporting communication with network nodes other than home network nodes. Accordingly, the trusted application may be executed when it is determined that the user equipment has established a radio connection with nodes other than those within the home network. Again, this provides usage information which can be correlated against that provided by those other networks.

In one embodiment, the step of initiating comprises initiating execution of the trusted application when it is determined that the user equipment is operating in one of a local breakout mode and a direct user equipment-to-user equipment mode. Accordingly, usage information may be provided when operating in a local breakout mode. Again, this enables the usage information to be correlated with the usage information provided by the networks supporting the local breakout.

Usage information may also be collected during direct communication between user equipment if the radio transmission technology enables direct mode communications between user equipment. It will be appreciated that such direct communication may consume spectrum allocated to the network but not be necessarily detectable by the network, or the network may not have means to collect information about such usage.

In one embodiment, the determination is made by the user equipment. Accordingly, the user equipment itself may determine that it is supporting communication for which usage needs to be reported.

In one embodiment, the determination is made by the user equipment in response to a trigger message received by the user equipment. Accordingly, a trigger message may be provided to indicate to the user equipment that it is supporting communication in, for example, a local breakout or other mode. This message may be provided from the home network when the user equipment communicates with a visited network.

In one embodiment, the determination is made by the user equipment based on an access point name used to establish communication.

In one embodiment, the usage information comprises at least one of a data volume, data timestamps, a number of data bearers, a quality of service, a serving network identifier, a radio access technology identifier, an operating system dependent application identifier and classes of traffic. It will be appreciated that the usage information may comprise any number of different parameters which may be used to determine the data usage at different levels of detail, which may be correlated with information provided by either the home network or the visited network.

In one embodiment, one class of traffic comprises zero-rated traffic. By providing usage information on zero-rated traffic, it is possible to ensure that the amount of traffic that should not be considered against any usage quota for the user equipment is correctly quantified.

In one embodiment, the step of transmitting comprises transmitting the usage information during the communication. Accordingly, the usage information may be transmitted in real-time between the user equipment and the network node. It will be appreciated that this provides the network with accurate and up-to-date usage information.

In one embodiment, the step of transmitting comprises transmitting the usage information periodically. Accordingly, in order to reduce traffic, the usage information may be provided intermittently.

In one embodiment, the step of transmitting comprises transmitting the usage information after the communication. Accordingly, the usage information may be provided after the communication has ceased. It will be appreciated that this minimizes the amount of usage information transmitted.

In one embodiment, the step of transmitting comprises establishing a secure channel with the home network node over which the usage information is transmitted. By establishing a secure channel, the trust in the usage information can be maintained.

In one embodiment, the method comprises the step of receiving at least one user equipment usage policy from the home network node. Accordingly, usage policy information may be transmitted to the user equipment from the home network. This usage policy may be executed by the trusted application. Because the usage policy is trusted and the application is trusted, the trusted application may operate as a proxy for the home network in enforcing any usage policies. This helps to reduce the traffic between the user equipment and the home network whilst ensuring that any usage policies are continued to be applied.

In one embodiment, the user equipment usage policy comprises at least one associated action for non-compliance. Accordingly, actions for non-compliance with the usage policy may be provided to the user equipment. Again, because the actions are trusted and because the application is trusted, the trusted application may again enforce the actions as a proxy for the home network.

In one embodiment, the step of receiving comprises establishing a secure channel with the home network node over which the at least one user equipment usage policy is received. Providing a secure channel helps to increase the trust in the transmission of the usage policy and/or associated actions.

In one embodiment, the method comprises the step of determining compliance of the data usage with the user equipment usage policy.

In one embodiment, the method comprises the step of when the data usage is determined to be non-compliant with the user equipment usage policy, initiating the least at one associated action for non-compliance.

According to a second aspect, there is provided user equipment, comprising: a trusted application executable on the user equipment to collect data usage information and to transmit the data usage information to a home network node.

In one embodiment, the trusted application comprises an operating system.

In one embodiment, the trusted application comprises a shim layer application.

In one embodiment, the trusted application is executed when it is determined that the user equipment is supporting communication with network nodes.

In one embodiment, the trusted application is executed when it is determined that the user equipment is supporting communication with network nodes other than home network nodes.

In one embodiment, the trusted application is executed when it is determined that the user equipment is operating in one of a local breakout mode and a direct user equipment-to-user equipment mode.

In one embodiment, the determination is made by the user equipment.

In one embodiment, the determination is made by the user equipment in response to a trigger message received by the user equipment.

In one embodiment, the determination is made by the user equipment based on an access point name used to establish communication.

In one embodiment, the usage information comprises at least one of a data volume, data timestamps, a number of data bearers, a quality of service, a serving network identifier, a radio access technology identifier, an operating system dependent application identifier and classes of traffic.

In one embodiment, the trusted application is operable to transmit the usage information during the communication.

In one embodiment, the trusted application is operable to transmit the usage information periodically.

In one embodiment, the trusted application is operable to transmit the usage information after the communication.

In one embodiment, the trusted application is operable to receiving at least one user equipment usage policy from the home network node.

In one embodiment, the user equipment usage policy comprises at least one associated action for non-compliance.

In one embodiment, the trusted application is operable to determine compliance of the data usage with the user equipment usage policy.

In one embodiment, the trusted application is operable, when the data usage is determined to be non-compliant with the user equipment usage policy, to initiate the least at one associated action for non-compliance.

According to a third aspect, there is provided a home network node method, comprising the steps of: receiving data usage information collected by a trusted application executable on user equipment; and comparing the data usage information with network data usage information provided by a network node to determine any mismatch in usage.

In one embodiment, the method comprises the step of transmitting an indication that the user equipment is authorised to support communication or establish a radio connection with network nodes other than home network nodes.

In one embodiment, the method comprises the step of transmitting an indication that the user equipment is authorised to support communication in one of a local breakout mode and a direct user equipment-to-user equipment mode.

In one embodiment, the usage information comprises at least one of a data volume, data timestamps, a number of data bearers, a quality of service, a serving network identifier, a radio access technology identifier, an operating system dependent application identifier and classes of traffic.

In one embodiment, one class of traffic comprises zero-rated traffic.

In one embodiment, the method comprises the step of determining that the network data usage information has not incorrectly identified zero-rated traffic.

In one embodiment, the step of receiving comprises receiving the usage information during the communication.

In one embodiment, the step of receiving comprises receiving the usage information periodically.

In one embodiment, the step of receiving comprises receiving the usage information after the communication.

In one embodiment, the step of receiving comprises receiving comprises establishing a secure channel with the user equipment over which the usage information is received.

In one embodiment, the method comprises the step of transmitting at least one user equipment usage policy from the home network node.

In one embodiment, the user equipment usage policy comprises at least one associated action for non-compliance.

In one embodiment, the step of transmitting comprises establishing a secure channel with the home network node over which the at least one user equipment usage policy is transmitted.

According to a fourth aspect, there is provided a home network node, comprising: reception logic operable to receive data usage information collected by a trusted application executable on user equipment; and comparison logic operable to compare the data usage information with network data usage information provided by a network node to determine any mismatch in usage.

In one embodiment, the home network node comprises transmission logic operable to transmit an indication that the user equipment is authorised to support communication or to establish a radio connection with network nodes other than home network nodes.

In one embodiment, the transmission logic is operable to transmit an indication that the user equipment is authorised to support communication in one of a local breakout mode and a direct user equipment-to-user equipment mode.

In one embodiment, the usage information comprises at least one of a data volume, data timestamps, a number of data bearers, a quality of service, a serving network identifier, a radio access technology identifier, an operating system dependent application identifier and classes of traffic.

In one embodiment, one class of traffic comprises zero-rated traffic.

In one embodiment, the comparison logic is operable to determine that the network data usage information has not incorrectly identified zero-rated traffic.

In one embodiment, the reception logic is operable to receive the usage information during the communication.

In one embodiment, the reception logic is operable to receive the usage information periodically.

In one embodiment, the reception logic is operable to receive the usage information after the communication.

In one embodiment, the reception logic is operable to establish a secure channel with the user equipment over which the usage information is received.

In one embodiment, the transmission logic is operable to transmit at least one user equipment usage policy from the home network node.

In one embodiment, the user equipment usage policy comprises at least one associated action for non-compliance.

In one embodiment, transmission logic is operable to establish a secure channel with the home network node over which the at least one user equipment usage policy is transmitted.

According to a fifth aspect, there is provided a computer program product operable, when executed on a computer, to perform the method steps of the first or third aspect.

Further particular and preferred aspects are set out in the accompanying independent and dependent claims. Features of the dependent claims may be combined with features.of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates user equipment using network access in a local breakout mode;
Figure 2 illustrates user equipment using network access in a home routed mode;
Figure 3 illustrates the arrangement of trusted applications in embodiments; and
Figure 4 illustrates the main processing steps undertaken when collecting usage data according to one embodiment.

### DESCRIPTION OF THE EMBODIMENTS

### Overview

Before discussing embodiments in any more detail, first an overview will be provided. When the network access for a user is via the home network gateway, as shown in Figure 2, the home network can collect usage information. When the user is roaming and using local breakout, as shown in Figure 1, the usage information collection needs to be performed in a local gateway of the visited network. This means that the because the entity which has the usage relationship with the user of the user equipment is the operator of the home network, the home network needs to trust the usage data reports that the visited network provides for that user to the home network. Also, the home network needs to have confidence that its own usage information is correct. Accordingly, the home network may want to have some data to correlate with that provided by the visited network or that generated internally itself in order to make sure that the usage data is sound.

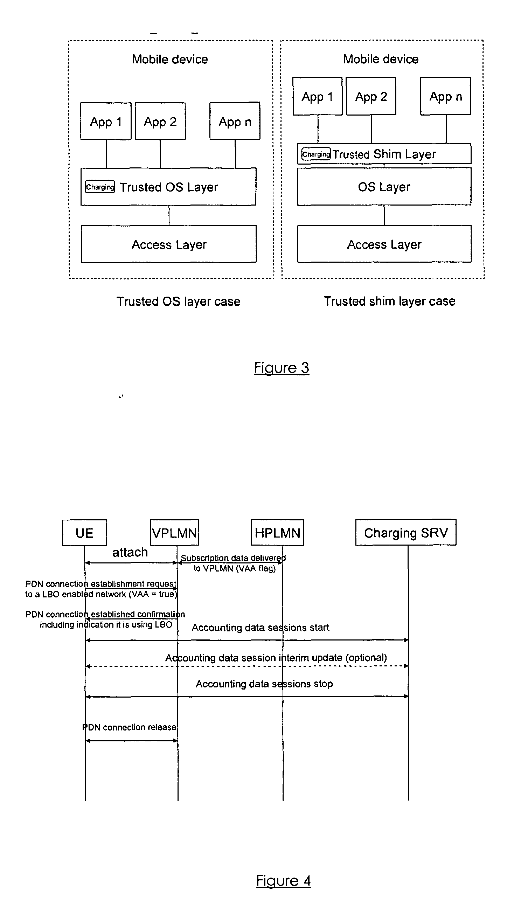

Accordingly, the user equipment is configured to be a trusted entity by the home public land mobile network (PLMN). Typically, the user equipment is trusted through the use of an operating system in the user equipment which is trusted and secure or because the data applications being executed on the user equipment need to request data services via a shim layer between applications and the operating system of the user equipment which is also trusted by the network and secure, as illustrated in Figure 3. It will be appreciated that a variety of techniques may be employed to maintain and test the integrity of such trusted applications to ensure that their functionality has not been changed or interfered with.

This enables the user equipment, as well as any other network node, to collect usage information at any time which can then be provided to the home network to be correlated with other usage information that the home network receives. In particular, the user equipment can collect usage or access data at any time such as when the network informs it that it is using services in local breakout mode and the user equipment can report this usage or access data to the home network on the user plane.

The usage information may provide total usage by the user equipment, usage for different types of bearers, usage for different applications, usage for different classes of traffic, such as a zero rated class (which should not contribute to the user's usage), usage for direct user equipment to user equipment communication, etc.

In addition, the user equipment may be provided with a usage policy and any associated compliance or non-compliance actions. This enables the trusted application to effectively operate as a proxy for the network node in monitoring and controlling usage. Such an approach is particularly beneficial when the user equipment is connected to a visited network. For example, this allows the implementation of data volume caps also in the local breakout mode with enforcement of these caps being performed by the user equipment or being user equipment triggered. This approach also allows for the implementation of some online usage charging mechanisms (for example prepaid mechanisms) or discounted usage policies that cannot be communicated to the visited network.

To maintain the trust and security between the trusted application and the home network, typically a secure usage data related transmission channel will be established between the user equipment and a usage data collection server in the home network over which the usage data and any usage policies and associated actions may be communicated between the user equipment and the home network.

### Usage Data Collection

Figure 4 illustrates the main processing steps undertaken by network nodes when collecting usage data according to one embodiment. In a third generation partnership project (3GPP) compliant system, local breakout is allowed for the general packet radio service (GPRS) and the enhanced package system (EPS). For these, the local breakout is enabled when the home subscriber server (HSS) enables the serving network to use a local gateway (a GPRS Gateway support mode (GGSN) for GPRS and a packet data network gateway (PGW) for EPS) to support the data sessions for mobile devices (known as mobile stations in GPRS or user equipment in EPS).

The HSS enables local breakout when the Visiting public land mobile network (VPLMN) Address Allowed flag (VAA) is set to "true" in the packet data network (PDN) subscription records of the subscription profile for the user equipment, as specified in 3GPP TS 23.060 and TS 23.401). This VAA flag indicates whether for a given user and visited PL MN that local breakout is enabled for a given access point name (APN) which uniquely identifies a specific network access point in a GGSN or PGW. This means that the SGSN (for GPRS) or mobile management entity (MME) for EPS knows when it is necessary to enable local breakout for a given access point name.

The accordingly, as shown in Figure 4, at step S1, the user equipment attaches to a VPLMN. The VPLMN communicates with the home PLMN (HPLMN) which in this case provides the VAA flag set to true, as mentioned above.

At step S2, a PDN connection establishment request to a local breakout-enabled network is sent from the user equipment to the VPLMN.

At step S3, a PDN connection established confirmation, including an indication of local breakout (such as the communication of the APN) is provided to the user equipment.

Accordingly, upon the successful enablement of a data connection in local breakout mode to a GGSN or MME, the SGSN or MME can confirm to the user equipment that a local breakout access is ongoing and can also reports the APN to the user equipment. The user equipment can then start enabling the local usage data collection function using its trusted application.

In this embodiment, at step S4, the user equipment can then initiate a usage data collection session by sending a "usage start" message to the usage data collection server, specifying the APN it is related to and the user identity. The protocol used between the user equipment and the usage server should typically be secure (for example a transport layer security-based protocol (TLS)).

The usage server may then provide usage data collection policies for the VPLMN and user to the user equipment if these are not installed using any of the device management methods. These policies may be for the whole aggregate of data or per service data flow (as specified in 3GPP TS 23. 203), that is per a packet flow identified by source/destination IP address, protocol number, source and destination TCP or UDP port and/or application identifier.

At step S5, the user equipment may report interim usage data records to the server and trigger events or actions when certain thresholds are reached on, for example, data values or due to time-based events.

At step S6, when the user equipment decides to close the local breakout data connection, it sends a "usage stop" message to the usage data collection server and then tears down the local breakout connection.

It will be appreciated that the PDN connection may cease to exist abruptly (for example due to an abrupt power off or due to loss of coverage) and therefore the user equipment will typically store locally the usage data and report this off-line to the usage server when it attaches again to the network. This usage data may be stored together with timestamps, the APN value and/or the IP addresses used to uniquely identify the PDN connection with the server. This is reported to the network typically using a dedicated PDN connection that the user equipment may establish when no other PDN connections are established and just for the purposes of reporting the usage data.

Hence, it can be seen that this approach allows the home network to overcome trust issues with visited network-provided usage data or trust issues with within its own network, thus providing or confidence with the deployment of local breakout and confidence in its own internal usage collection systems. This approach would be particularly useful as local breakout may be used to offload traffic from the network (also known as selected IP traffic offload) and may be required to efficiently operate IP multimedia subsystem (IMS) voice and video services. Providing such trusted information is difficult to achieve in other ways.

It will be appreciated that the usage connection could be used and active all the time or just used to sample the accuracy of usage data provided by the visited network. It can be used either in an online or off-line way. The off-line approach stores the usage data in the user equipment which is then uploaded in bulk typically when the user equipment has no other activity or at night when the network is not too loaded.

It will also be appreciated that the user equipment could be statically configured to perform data usage collection under different pre-specified scenarios (such as during local breakout or intermittently or when performing direct user equipment to user equipment communication, etc.) or may be dynamically configured either alone (as the result of a unicast message to the user equipment) or as part of a group (in response to a multicast message).

Hence, it can be seen that a mechanism may be provided by which the network can inform the user equipment that the network the user equipment is accessing local breakout or some other connection which is not with the home network. Alternatively, a mechanism may be provided whereby the user equipment may be able to make this determination itself, typically based on an access point name. The network accessed in local breakout may provide a data route from the user equipment to the usage server in the home network or a second network or second method is provided to transfer the usage data collected in the user equipment to the home network. The operating system in the user equipment supports the usage data collection in a secure and trusted way or the user equipment operating system can either be modified or augmented with a trusted shim layer to perform this function (for example software that implements a virtual interface to applications on top of the access layer). The usage data can be used to determine the accuracy of charging data provided to the home network. The usage data collection server or the device management system subsystem is able to install the usage policies related to the network that the user equipment is accessing in local breakout mode and to the subscriber using the user equipment, together with any associated compliance or non-compliance actions.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A user equipment method, comprising the steps of:
providing a trusted application executable on said user equipment;
initiating execution of said trusted application to collect data usage information; and
transmitting said data usage information to a home network node.

2. The method of claim 1, wherein said trusted application comprises one of an operating system and a shim layer application.

3. The method of claim 1 or 2, wherein said step of initiating comprises at least one of initiating execution of said trusted application when it is determined that said user equipment is supporting communication with network nodes, initiating execution of said trusted application when it is determined that said user equipment is supporting communication with network nodes other than home network nodes, and initiating execution of said trusted application when it is determined that said user equipment is operating in one of a local breakout mode and a direct user equipment-to-user equipment mode.

4. The method of claim 3, wherein said determination is made by said user equipment.

5. The method of claim 3 or 4, wherein said determination is made by one of said user equipment in response to a trigger message received by said user equipment and said user equipment based on an access point name.

6. The method of any preceding claim, wherein said usage information comprises at least one of a data volume, data timestamps, a number of data bearers, a quality of service, a serving network identifier, a radio access technology identifier, an operating system dependent application identifier and classes of traffic.

7. The method of any preceding claim, wherein said step of transmitting comprises at least one of transmitting said usage information during said communication, transmitting said usage information periodically and transmitting said usage information after said communication.

8. The method of any preceding claim, comprising the step of receiving at least one user equipment usage policy from said home network node.

9. The method of claim 8, wherein said user equipment usage policy comprises at least one associated action for non-compliance.

10. The method of claim 8 or 9, comprising the step of determining compliance of said data usage with said user equipment usage policy.

11. The method of claim 9 or 10, comprising the step of when said data usage is determined to be non-compliant with said user equipment usage policy, initiating said least at one associated action for non-compliance.

12. User equipment, comprising:
a trusted application executable on said user equipment to collect data usage information and to transmit said data usage information to a home network node.

13. A home network node method, comprising the steps of:
receiving data usage information collected by a trusted application executable on user equipment; and
comparing said data usage information with network data usage information provided by a network node to determine any mismatch in usage.

14. A home network node, comprising:
reception logic operable to receive data usage information collected by a trusted application executable on user equipment; and
comparison logic operable to compare said data usage information with network data usage information provided by a network node to determine any mismatch in usage.

15. Computer program product a computer program product operable, when executed on a computer, to perform the method steps of any one of claims 1 to 11 or 13.
